# EUROPÄISCHE PATENTSCHRIFT

(11) **EP 3 058 203 B1**
(45) Veröffentlichungstag und Bekanntmachung des Hinweises auf die Patenterteilung: **29.11.2017**
(21) Anmeldenummer: 14814789.5
(22) Anmeldetag: 05.12.2014
(51) Int. Cl.: F02C 9/00, G05B 13/04, F23N 5/00

(54) **VERFAHREN ZUR REGELUNG UND/ODER STEUERUNG DER STELLGRÖSSEN EINER GASTURBINE IN EINEM VERBRENNUNGSSYSTEM**
METHOD FOR REGULATING AND/OR CONTROLLING THE MANIPULATED VARIABLES OF A GAS TURBINE IN A COMBUSTION SYSTEM
PROCÉDÉ DE RÉGULATION ET/OU DE COMMANDE DES GRANDEURS DE RÉGLAGE D'UNE TURBINE À GAZ DANS UN SYSTÈME DE COMBUSTION

(30) Priorität: 18.12.2013 DE 102013226409
(43) Veröffentlichungstag der Anmeldung: 24.08.2016
(73) Patentinhaber: Siemens Aktiengesellschaft, 80333 München (DE)
(72) Erfinder: AMANN, Christian, 46238 Bottrop (DE); BECKMANN, Björn, 47057 Duisburg (DE); DEUKER, Eberhard, 45481 Mülheim an der Ruhr (DE); KADAU, Kai, Lake Wylie, South Carolina 29710 (US); KOCK, Boris Ferdinand, 40878 Ratingen (DE); ROLLMANN, Georg, 45472 Mülheim Ruhr (DE); SCHMITZ, Sebastian, 10437 Berlin (DE); ZWINGENBERG, Marcel, 46509 Xanten (DE)
(86) Internationale Anmeldenummer: PCT/EP2014/076757
(87) Internationale Veröffentlichungsnummer: WO 2015/091029

(56) Entgegenhaltungen:
- DE-A1-102008 005 939
- US-A1- 2004 088 060
- US-A1- 2008 243 352

## Beschreibung

Die Erfindung betrifft ein Verfahren zur Regelung und/oder Steuerung der Stellgrößen einer Gasturbine in einem Verbrennungssystem.

Eine Gasturbine ist eine Strömungsmaschine, die in der Regel einen Verdichter, eine Turbine und einen Brennkammerabschnitt umfasst. Im Verdichter wird angesaugte Umgebungsluft verdichtet und die verdichtete Luft schließlich dem Brennkammerabschnitt zugeführt. Im Brennkammerabschnitt ist wenigstens eine Brennkammer mit zumeist mehreren Brennern angeordnet, denen die verdichtete Luft zugeführt wird. Neben der verdichteten Luft wird den Brennern außerdem ein Brennstoff zugeführt, der mit der Luft vermischt und verbrannt wird. Die dabei in der Brennkammer entstehenden heißen Verbrennungsabgase werden der Expansionsturbine zugeführt, wo sie entspannen und abkühlen und dabei die Gasturbine in Rotation versetzen. Auf diese Weise wird thermische Energie der Verbrennungsabgase in mechanische Arbeit umgewandelt, die einerseits zum Antreiben des Verdichters und andererseits zum Antreiben eines Verbrauchers, beispielsweise eines Generators zum Erzeugen von Strom eingesetzt wird.

Zur Einstellung der gewünschten Leistung der Gasturbine ist es notwendig, einen bestimmten Gasmassenstrom einzustellen. Dieser teilt sich auf in die unterschiedlichen Brennerstufen. In diese Aufteilung geht eine Anzahl an Parametern ein. Diese Parameter variieren von Gasturbinenanlage zu Gasturbinenanlage, selbst dann, wenn diese baugleich sind. Grund für diese Variationen sind unterschiedliche Umgebungsbedingungen (Aufstellungsort der Gasturbinenanlage), Gasqualität und spezifische Kundenanforderungen. Zudem können die Gasturbinenparameter beim Betrieb einer Gasturbinenanlage mit der Zeit Veränderungen unterworfen sein. Dies führt dazu, dass ein zeitaufwendiges Neueinstellen oder Nacheinstellen der Verbrennungsparameter nötig werden kann. Durch den Einstellungsprozess werden hohe Kosten und Stillstandzeiten verursacht.

Bei der Verbrennung in der Brennkammer ist darauf zu achten, dass eine stabile Flamme vorliegt. Instabilitäten der Flamme treten insbesondere aufgrund von resonanten Wärmefreisetzungsschwankungen auf und können Schwingungen und Vibrationen der Brennkammer verursachen, welche die Lebensdauer der Brennkammer herabsetzen und Wartungsintervalle verkürzen. Außerdem kann hieraus ein erhöhter Schadstoffausstoß (Emissionen) resultieren. Das Auftreten von Verbrennungsschwingungen ist auch als Brummen bekannt. Die Stabilität der Flamme wird von einer großen Anzahl von Störgrößen beeinflusst.

Bei Gasturbinen hat die Aufteilung des Brennstoffs auf verschiedene Brennerstufen entscheidenden Einfluss auf das Brummverhalten und die Emissionen. Beide Größen müssen minimiert oder zumindest unter einem Schwellwert gehalten werden. Brummen und Emissionen werden aber auch durch "Störgrößen" wie z. B. Umgebungszustand, Alterungseffekte, Verschmutzung usw. beeinflusst. Beispiele für weitere Störgrößen sind die Umgebungstemperatur, die Dichte und der Heizwert des Brennstoffes, aber auch der Bauzustand der Gasturbinenanlage, insbesondere der Brennkammer und der Brenner.

Bisher wurden in der Leittechnik Kennfelder hinterlegt, die für jeden Betriebszustand den Stellgrößen Werte zuordnen. Stellgrößen sind dabei Einstellgrößen zur Regelung des technischen Systems, wobei die Stellgrößen vorzugsweise auch Zustandsvariablen des technischen Systems entsprechen können. Soweit die Störgrößen messtechnisch erfasst werden, können noch gewisse Korrekturfunktionen eingebracht werden, z. B. eine umgebungstemperaturabhängige Modulation eines Brennstoffanteils. Weil der Einfluss der Stell- und Störgrößen auf das Brummen und Emissionen nur unzureichend bekannt ist und manche Störgrößen messtechnisch gar nicht erfasst werden können, führt diese kennfeldbasierte Steuerung immer wieder zu erhöhten Emissionen oder unzulässig starkem Brummen.

Verfahren zur Regelung und/oder Steuerung der Stellgrößen einer Gasturbine gemäß dem Stand der Technik sind aus US 2004/088060 A1 und US 2008/0243352 A1 bekannt.

Die Aufgabe der Erfindung ist daher die Angabe eines Verfahrens zur Verfügung zu stellen, welches das oben genannte Problem vermindert oder vermeidet.
Die Aufgabe wird durch die Angabe eines Verfahrens zur Regelung und/oder Steuerung der Stellgrößen einer Gasturbine in einem Verbrennungssystem gelöst, wobei zumindest
- ein erstes Submodell der Gasturbine, mit ersten Erwartungswerten, welche das Emissionsverhaltens der Gasturbine in dem Verbrennungssystem beschreiben, erstellt wird,
- ein zweites Submodell der Gasturbine mit zweiten Erwartungswerten, welche das Stabilitätsverhalten der Gasturbine beschreiben, erstellt wird,
- ein drittes Submodell mit dritten Erwartungswerten, welche die thermodynamische Performance der Gasturbine beschreiben, erstellt wird,
- und wobei das erste Submodell vor Inbetriebnahme der Gasturbine erstellt wird und das zweite und das dritte Submodell während der Inbetriebnahme der Gasturbine erstellt werden,
- und wobei die Stellgrößen zumindest unter Zuhilfenahme der von den ersten, zweiten und dritten Submodellen gelieferten ersten, zweiten und dritten Erwartungswerte eingestellt werden, so dass ein optimierter Betrieb der Gasturbine ermöglicht wird,
- wobei das erste, das zweite und das dritte Submodell während des Betriebs der Gasturbine zeitnachgeführt aktualisiert werden, indem die von den jeweiligen Submodellen berechneten Erwartungswerte an die zu den Erwartungswerten korrelierenden, gemessenen Messwerte angepasst werden,
- und wobei bei Änderung des Betriebszustandes die Stellgrößen anhand der zeitnachgeführten Submodelle eingestellt werden, so dass ein optimierter Betrieb der Gasturbine ermöglicht wird.

Erfindungsgemäß wurde erkannt, dass bei modernen mehrstufigen Verbrennungssystemen eine "manuelle" Optimierung des Verbrennungsverhaltens aufgrund der erhöhten Anzahl an Stellgrößen, beispielsweise mehrere Brennstoffzerlegungen, nicht mehr durchführbar ist. Dabei umfasst die Änderung im Betriebszustand z.B. altersbedingte Änderungen oder auch die Änderung der Werte von Störgrößen.

Erfindungsgemäß werden nun zumindest drei Submodelle erstellt. Das erste Submodell beschreibt das Emissionsverhalten des Verbrennungssystems und kann z.B. auf einem Brennerprüfstand ermittelt werden, d.h. das erste Submodell liefert einen Erwartungswert, welcher das Emissionsverhalten der Gasturbine in dem Verbrennungssystem beschreibt. Das erste Submodell wird anhand von zu den Erwartungswerten korrelierenden Messdaten zeitnachgeführt aktualisiert. Dabei wird die Aktualisierung während des laufenden Betriebs mit einem gewissen Zeitversatz vorgenommen. Das zweite Submodell beschreibt das Stabilitätsverhalten und wird während des Betriebs der Gasturbine erstellt und im laufenden Betrieb der Gasturbine zeitnachgeführt aktualisiert. Dabei kann das zweite Submodell während der Verbrennungsinbetriebsetzung erstellt werden. Ein drittes Submodell mit dritten Erwartungswerten, welche die thermodynamische Performance der Gasturbine beschreiben, wird ebenfalls erstellt. Dies ist beispielsweise die Gasturbineneingangstemperatur. Dabei kann das dritte Submodell im Betrieb mit Hilfe aktueller Messdaten zeitnachgeführt aktualisiert werden.

Erfindungsgemäß wird durch die Aufsplittung in Submodelle nun die Eingangsparameterzahl der einzelnen Modelle reduziert. So kann beispielsweise das Emissionsverhalten ohne Berücksichtigung von gasturbinenbegrenzenden Werten (Maschinenlimits) erfasst werden.

Sind die Stellgrößen unter anderem beispielsweise die Aufteilung des Brennstoff, so können erfindungsgemäß, diese Brennstoffanteile als "Stellgrößen" so eingestellt werden, dass bei sich ändernden Störgrößen in jedem Lastpunkt das Brummen und die Emissionen minimiert oder zumindest unter einem Schwellwert gehalten werden. Ausgehend von der Kenntnis des Gasturbinensystemverhaltens und des aktuellen Zustands kann nun mit der Erfindung eine Optimierung der Stellgrößen durchgeführt werden, beispielsweise um die gewünschte Leistung unter Einhaltung der Randparameter ohne langwierige Testphasen zu erreichen.

Mit dem erfindungsgemäßen Verfahren für die Kombination der zumindest drei Submodelle, wird nun eine automatisierte Optimierung der Stellgrößen (Brennstoffmassenstrom, Brennstoffanteile) im Hinblick auf mehrere Zielgrößen (Emissionen, Brummen, Turbineneintrittstemperatur) ermöglicht.

In bevorzugter Ausgestaltung liefert nach der zeitnachgeführten Aktualisierung der Submodelle das erste, zweite und dritte zeitnachgeführte Submodell geänderte erste, zweite und dritte Erwartungswerte zurück, wobei sich zumindest einer der geänderten ersten, zweiten und dritten Erwartungswerte von den ursprünglichen ersten, zweiten und dritten Erwartungswerten unterscheidet und wobei zumindest eine der Stellgrößen zumindest unter Zuhilfenahme dieser geänderten ersten, zweiten und dritten Erwartungswerte geändert wird, so dass ein optimierter Betrieb der Gasturbine ermöglicht wird.

In bevorzugter Ausgestaltung wird der optimierte Betrieb anhand einer bedingten Optimierung einer Zielfunktion bestimmt, wobei in die Bedingungen zumindest die zurückgelieferten Erwartungswerte der drei Submodelle einfließen.

Bevorzugt erfolgt eine zeitnachgeführte Aktualisierung erst dann, wenn die Differenz von zumindest einem der gemessenen Messwerten mit von dem jeweiligen Submodell zurückgelieferten, korrelierenden Erwartungswerten einen vorab definierten Schwellwert erreicht. Dieser Schwellwert wird modellspezifisch und auf das Submodell bezogen, festgelegt. Der Schwellwert nimmt mit zunehmender Alterung zu. Bei Überschreiten dieses modellspezifischen Schwellwerts wird das betroffene Submodell nun an den aktuellen Zustand angepasst, d.h. nachgezogen. Für diese Nachziehung können verschiedene Methoden verwendet werden, z.B. Least Squares, Kalman-Filter.

In bevorzugter Ausgestaltung wird als zumindest ein Erwartungswert des ersten Submodells der NOx-Gehalt im Verbrennungsabgas und/oder der CO-Gehalt im Verbrennungsgas und/oder ein Druckabfall über eine Brennkammer herangezogen.

Bevorzugt weist die Gasturbine zumindest einen Brenner auf, wobei als zumindest ein Erwartungswert des zweiten Submodells zumindest ein Brennerparameter herangezogen wird.

Bevorzugt wird als zumindest ein Erwartungswert des dritten Submodells die Gasturbineneintrittstemperatur und/oder Verdichtereintrittsmassenstrom und/oder chemische Brennstoffzusammensetzung herangezogen.

Weitere Merkmale, Eigenschaften und Vorteile der vorliegenden Erfindung ergeben sich aus der nachfolgenden Beschreibung unter Bezugnahme auf die beiliegende Figur. Darin zeigt:

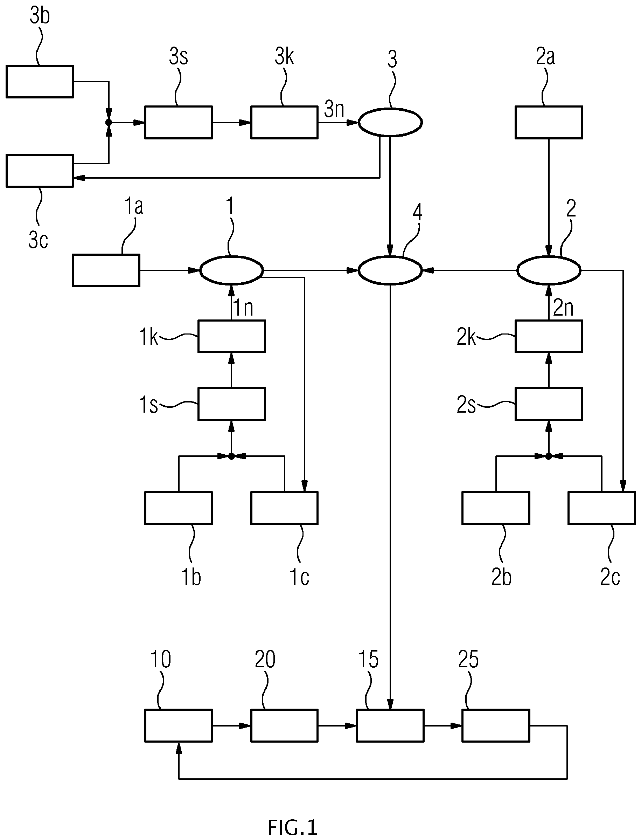

- FIG 1:: schematisch das Verfahren.

Das erste Submodell 1 ermittelt das Emissionsverhalten des Verbrennungssystems. Das erste Submodell 1 wird zunächst auf einem Brennerprüfstand vor Inbetriebnahme der Gasturbine 10 erstellt 1a, d.h. die dort berechneten/gemessenen Erwartungswerte werden dem ersten Submodell 1 zugrunde gelegt. Geeignete Eingangswerte für die Berechnung der Erwartungswerte des ersten Submodells 1 hier z.B. das Stickoxidgehalt (NOx-Gehalt) und das Kohlenmonoxidgehalt (CO-Gehalt), welche das Emissionsverhalten der Gasturbine 10 in dem Verbrennungssystem beschreiben, sind beispielsweise die Feuerungstemperatur (ausgedrückt durch die gemessene Abgastemperatur), die Stellung der Vorleitschaufel, sowie die Umgebungsparameter Temperatur und relative Feuchte. Dies kann beispielsweise mittels eines Analysensystems, beispielsweise eines Gasmet Analysensystems, welches zur kontinuierlichen Messung von Gasen verwendet werden kann, vorgenommen werden. Dieser Gasmet eignet sich besonders zur Messung von Schadstoffkonzentration und kann das Abgas über die auf die Anteile der relevanten Komponenten (NOx/CO) untersuchen. Diese Parameter werden nun für das erste Submodell 1 herangezogen.

Das erste Submodell 1 der Gasturbine 10 beinhaltet nun erste Erwartungswerte 1c, welche das Emissionsverhalten der Gasturbine 10 in dem Verbrennungssystem beschreiben. Das erste Submodell 1 wird vor Inbetriebnahme der Gasturbine erstellt und während des Betriebs der Gasturbine zeitnachgeführt aktualisiert. D.h., das erste Submodell 1 liefert nun Erwartungswerte 1c für die gewünschten Zielgrößen wie z.B. NOx, Luftfeuchte, Amplituden etc., die nun mit den realen Ergebnisgrößen, d.h. den realen Messwerten 1b abgeglichen werden können, d.h. es wird die Differenz des Erwartungswerts 1c mit dem korrelierenden Messwert berechnet. Über diesen Abgleich kann eine Datenbank von Differenzwerten im nachfolgenden als Deltawerte bezeichnet, erzeugt werden. Die Höhe dieser Deltawerte wird mit zunehmender Alterung zunehmen. Bei Überschreitung von modellspezifisch definierten Schwellwerten 1s wird nun das betroffene erste Submodell 1 an den aktuellen Zustand durch einen Korrekturwert 1k angepasst bzw. nachgeführt 1n. Für die Nachführung der Erwartungswerte 1c des Submodells 1 können verschiedene Methoden verwendet werden. Dies kann beispielsweise durch mathematische Verfahren wie Least Squares, Kalman-Filter etc. vorgenommen werden. Es ist zu beachten, dass ohne Änderung des Betriebszustandes d.h. ohne Alterung, Auftreten von Störgrößen etc. das erste Submodell 1 Erwartungswerte 1c liefert, die mit dem Messwerten 1b übereinstimmen.

Das zweite Submodell 2 der Gasturbine beinhaltet zweite Erwartungswerte 2c, welche das Stabilitätsverhalten der Gasturbine beschreiben. Dies sind z.B. Brennkammerparameter/Brennerparameter, welche für das Stabilitätsverhalten notwendig sind, d.h. welche im Wesentlichen für das Brummen und die Brennkammerschwingung in der Gasturbine herangezogen werden können. Diese Parameter sind im Wesentlichen oszillierende Größen, die zum Bewerten über eine Fast Fourier Transformation (FFT) in Frequenzen und Amplituden aufgeteilt werden. Die FFT stellt ein besonders geeignetes Mittel zum Analysieren zeitlich veränderlicher Größen dar. Diese Parameter werden nun für das zweite Submodell 2 herangezogen.

Das zweite Submodell 2 beschreibt das Stabilitätsverhalten und wird während der Verbrennungsinstandsetzung erstellt 2a, d.h. die dort gemessenen Parameter werden dem zweiten Submodell 2 zugrunde gelegt. Das zweite Submodell 2 wird während des Betriebs der Gasturbine zeitnachgeführt aktualisiert. D.h., das zweite Submodell 2 liefert nun Erwartungswerte 2c für die gewünschten Zielgrößen wie z.B. NOx, Gasturbineneintrittstemperaturen, Amplituden etc., die nun mit den realen Ergebnisgrößen, d.h. den realen Messwerten 2b abgeglichen werden können, d.h. es wird die Differenz der Erwartungswerte 2c mit den Messwerten 2b berechnet. Über diesen Abgleich kann eine Datenbank von Differenzwerten im Nachfolgenden ebenfalls als Deltawerten bezeichnet, erzeugt werden. Die Höhe dieser Deltawerte wird mit zunehmender Alterung zunehmen. Bei Überschreitung von modellspezifisch definierten Schwellwerten 2s wird nun das betroffene zweite Submodell 2 an den aktuellen Zustand durch einen Korrekturwert 2k angepasst bzw. nachgeführt 2n. Für die Nachführung der Erwartungswerte 2c des Submodells 2 können verschiedene Methoden verwendet werden. Dies kann ebenfalls durch mathematische Verfahren wie Least Squares, Kalman-Filter etc. vorgenommen werden. Es ist zu beachten, dass ohne Alterung das zweite Submodell 2 Erwartungswerte 2c liefert, die mit den Messwerten 2b übereinstimmen.

Das dritte Submodell 3 beinhaltet dritte Gasturbinenparameter, welche die thermodynamische Performance der Gasturbine beschreiben. Das dritte Modell 3 ist daher ein Performancemodell. Dieses ist beispielsweise als eine Datenbank aufgebaut, in der thermodynamische Parameter einfließen. Diese Parameter dienen der thermodynamischen Bilanzierung der Gasturbine. Dies kann beispielsweise die Gasturbineneintrittstemperatur, Verdichtereintrittsmassenstrom, chemische Brennstoffzusammensetzung etc. sein. Das dritte Submodell 3 liefert nun Erwartungswerte 3c für die gewünschten Zielgrößen wie z.B. NOx, Gasturbineneintrittstemperaturen, Amplituden etc., die nun mit den realen Ergebnisgrößen, d.h. den realen Messwerten 3b abgeglichen werden können, d.h. es wird die Differenz der Erwartungswerte 3c mit den korrelierenden Messwerten 3b berechnet. Über diesen Abgleich kann eine Datenbank von Differenzwerten im Nachfolgenden ebenfalls als Deltawerte bezeichnet, erzeugt werden. Die Höhe dieser Deltawerte wird mit zunehmender Alterung zunehmen. Bei Überschreitung von modellspezifisch definierten Schwellwerten 3s wird nun das betroffene Submodell 3 an den aktuellen Zustand durch einen Korrekturwert 3k angepasst bzw. nachgeführt 3n. Für die Nachführung der Erwartungswerte 3c des Submodells 3 können verschiedene Methoden verwendet werden. Dies kann ebenfalls durch mathematische Verfahren wie Least Squares, Kalman-Filter etc. vorgenommen werden. Es ist zu beachten, dass ohne Alterung das zweite Submodell 3 Erwartungswerte 3c liefert, die mit den Messwerten 3b übereinstimmen.

Wird nun der Betriebszustand geändert 20, beispielsweise indem der Gasturbine nun eine Leistungsanforderung mitgeteilt wird, so können auf Basis des aktuellen Betriebes nun drei aktuelle Messparametersätze 1b,2b,3b mit Messwerten ermittelt werden, die sich aufgrund von Störgrößen und/oder alterungsbedingt von den vorherigen gemessenen Messwerten 1c,2c,3c unterscheiden. Die drei Submodelle 1,2,3 werden mithilfe der Messwerte 1b,2b,3b nun wie oben beschrieben nachgezogen und liefern neue Erwartungswerte 1c,2c,3c. Diese werden z.B. in einer gemeinsamen Datenbank, welche auch als kombiniertes Modell 4 bezeichnet werden kann, gespeichert.

Ausgehend von der Kenntnis des Systemverhaltens, d.h. des Gasturbinenverhaltens, durch die drei nachgezogenen Submodelle 1,2,3 mit den Erwartungswertsätze 1c,2c,3c und des aktuellen Zustands kann nun eine Optimierung einer vorab bestimmten Zielfunktion 15 und damit die Optimierung der Stellgrößen 25 durchgeführt werden.

Dabei ist die Optimierung eine Optimierung mit zusätzlichen Nebenbedingungen bzw. Randbedingungen. Als Nebenbedingungen werden dabei solche Bedingungen bezeichnet, die sich in ihrer Art vom eigentlichen Hauptproblem unterscheiden und zusätzlich erfüllt sein sollen. Die Randbedingungen werden dabei mit Hilfe der drei nachgezogenen Submodelle 1,2,3 erstellt. Durch das nachgezogene Submodell 1 werden dabei limitierte Grenzwerte, bezogen auf NOx und CO, ermittelt, mit welchen nun Randbedingungen für die Zielfunktion 15 formuliert werden.
Durch das nachgezogene Submodell 2 werden nun limitierte Grenzwerte, bezogen auf das Brummen (d.h. der Grenzwerte für die Amplituden als Funktion des Frequenzbandes), ermittelt, mit welchen nun Randbedingungen für die Zielfunktion 15 formuliert werden. D.h., dass die Einstellparameter für optimales Emissionsverhalten bestimmt werden, unter Berücksichtigung des aktuellen Brummverhaltens der Maschine. Dies bedeutet, dass das zweite Submodell 2 die Stabilitätsgrenzen der Maschine vorgibt, also den Rahmen, in dem die Erwartungswerte 2c verschoben werden können, ohne negative Effekte auf den Betrieb zu haben.

Durch das nachgezogene Submodell 3 werden nun limitierte Grenzwerte bezogen auf die Gasturbineneintrittstemperatur, Gasturbinenaustrittstemperatur, und der Leistung ermittelt, so dass sie immer im Intervall Garantiewert +/- vertraglicher Testtoleranz liegt, und mit welchen nun Randbedingungen für die Zielfunktion 15 formuliert werden. Dabei umfasst die zu optimierende Zielfunktion 15 verschiedene Stellgrößen 25. Einer dieser Stellgrößen 25 ist zum Beispiel die Schaufelverstellung, insbesondere die Leitschaufelverstellung (LSV).
So kann z.B. erfindungsgemäß die gewünschte Leistung unter Einhaltung der Randparameter ohne langwierige Testphasen erreicht werden.

So können z.B. die limitierten Grenzwerte der Gasturbineneintrittstemperatur und der Gasturbinenaustrittstemperatur, welche durch das Submodell 3 ermittelt werden und welche in die Randbedingungen mit einfließen, zusammen mit den durch die Zielfunktion 15 ermittelten Stellgrößen 25, genutzt werden, um bei gleicher Leistung eine für die Verbrennung günstigere Gasturbineneintrittstemperatur unter Einhaltung der Bedingungen für den Betrieb eines an die Gasturbine angeschlossenen Kessels zu bestimmen.

Mit Hilfe der Submodelle 1,2,3, welche in Bezug auf verschiedene Größen einen automatisiert optimierten Betriebspunkt liefern, kann nun eine vorab bestimmte Zielfunktion 15 optimiert werden und die Stellgrößen 25 entsprechend variiert, d.h. optimiert an die Gasturbine weitergeleitet werden.

Durch die Aufspaltung in Submodelle 1,2,3 kann zumindest das Emissionsverhalten oder das Emissionsverhalten und das Stabilitätsverhalten ohne Berücksichtigung von Maschinenlimits erfasst werden. Die Eingangsparameterzahl der einzelnen Modelle 1,2,3 kann im Vergleich zu einem Gesamtmodell wie im Stand der Technik reduziert werden.

Erfindungsgemäß wurde daher das gesamte Verbrennungsmodell in Stabilitäts-, Emissions- und Performance-Submodelle 1,2,3 aufgespalten. Weiterhin wurden diese Submodelle 1,2,3 auch zeitlich nachgeführt.

Es ist dadurch beispielsweise möglich, dass der berechnete limitierte Grenzwert der Gasturbineneintrittstemperatur in die Berechnung mit einbezogen wird, was zu einer stabilen Verbrennung, insbesondere in Teillast, führt.

In dieser Erfindung wird das Verfahren für die Kombination von zeitnachgeführten Submodellen 1,2,3 für die automatisierte Optimierung der Stellgrößen 25 (LSV, Brennstoffmassenstrom, Brennstoffanteile) im Hinblick auf mehrere Zielgrößen (Leistung, TT1, NOx, Brummen) beschrieben. Dadurch ergibt sich ein deutlich verringerter Regelaufwand. Zudem ist die Gasturbine immer im optimalen Betriebspunkt wobei das Optimum kundenspezifisch definiert werden kann. Auch ergibt sich eine Kompensation von Alterungsverhalten der Gasturbine im Hinblick auf Stabilität, Emissionen und Performance.

## Patentansprüche

1. Verfahren zur Regelung und/oder Steuerung der Stellgrößen (25) einer Gasturbine in einem Verbrennungssystem,
**dadurch gekennzeichnet, dass** zumindest
- ein erstes Submodell (1) der Gasturbine, mit ersten Erwartungswerten (1c), welche das Emissionsverhaltens der Gasturbine in dem Verbrennungssystem beschreiben, erstellt wird,
- ein zweites Submodell (2) der Gasturbine mit zweiten Erwartungswerten (2c), welche das Stabilitätsverhalten der Gasturbine beschreiben, erstellt wird,
- ein drittes Submodell (3) mit dritten Erwartungswerten (3c), welche die thermodynamische Performance der Gasturbine beschreiben, erstellt wird,
- und wobei das erste Submodell (1) vor Inbetriebnahme der Gasturbine erstellt wird und das zweite (2) und das dritte Submodell (3) während der Inbetriebnahme der Gasturbine erstellt werden,
- und wobei die Stellgrößen (25) zumindest unter Zuhilfenahme der von den ersten, zweiten und dritten Submodellen (1,2,3) gelieferten ersten (1c), zweiten (2c) und dritten (3c) Erwartungswerte eingestellt werden, so dass ein optimierter Betrieb der Gasturbine ermöglicht wird,
- wobei das erste (1), das zweite (2) und das dritte (3) Submodell während des Betriebs der Gasturbine zeitnachgeführt aktualisiert werden (1n,2n,3n), indem die von den jeweiligen Submodellen (1,2,3) berechneten Erwartungswerte (1c,2c,3c) an die zu den Erwartungswerten (1c,2c,3c) korrelierende, gemessene Messwerte (1b,2b,3b) angepasst werden,
- und wobei bei Änderung des Betriebszustandes die Stellgrößen (25) anhand der zeitnachgeführten Submodelle (1,2,3) eingestellt werden, so dass ein optimierter Betrieb der Gasturbine ermöglicht wird.

2. Verfahren zur Regelung und/oder Steuerung nach Anspruch 1,
**dadurch gekennzeichnet, dass** nach der zeitnachgeführten Aktualisierung der Submodelle das erste, zweite und dritte zeitnachgeführte Submodell einen geänderten ersten, zweiten und dritten Erwartungswert (1c,2c,3c) zurückliefern und wobei sich zumindest einer des geänderten ersten, zweiten und dritten Erwartungswerts (1c,2c,3c) von dem ursprünglichen ersten, zweiten und dritten Erwartungswert (1c,2c,3c) unterscheidet und wobei zumindest eine der Stellgrößen zumindest unter Zuhilfenahme dieses geänderten ersten, zweiten und dritten Erwartungswert (1c,2c,3c) geändert wird, so dass ein optimierter Betrieb der Gasturbine ermöglicht wird.

3. Verfahren zur Regelung und/oder Steuerung nach Anspruch 1 oder 2,
**dadurch gekennzeichnet, dass** der optimierte Betrieb anhand einer bedingten Optimierung einer Zielfunktion (15) bestimmt wird und wobei in die Bedingungen zumindest die zurückgelieferten Erwartungswerte (1c,2c,3c) der drei Submodelle (1,2,3) einfließen.

4. Verfahren nach einem der vorhergehenden Ansprüche,
**dadurch gekennzeichnet, dass** eine zeitnachgeführte Aktualisierung erst dann erfolgt, wenn die Differenz von zumindest einem der gemessenen Messwerten (1b,2b,3b) mit von dem jeweiligen Submodell (1,2,3) zurückgelieferten, korrelierenden Erwartungswerten (1c,2c,3c) einen vorab definierten Schwellwert (1s,2s,3s) erreicht.

5. Verfahren nach einem der vorhergehenden Ansprüche,
**dadurch gekennzeichnet, dass** als zumindest ein Erwartungswert (1c) des ersten Submodells (1) der NOx-Gehalt im Verbrennungsabgas und/oder der CO-Gehalt im Verbrennungsgas und/oder ein Druckabfall über eine Brennkammer herangezogen wird.

6. Verfahren nach einem der vorhergehenden Ansprüche,
**dadurch gekennzeichnet, dass** die Gasturbine zumindest einen Brenner aufweist und als zumindest ein Erwartungswert (2c) des zweiten Submodells (2) zumindest ein Brennerparameter herangezogen wird.

7. Verfahren nach einem der vorhergehenden Ansprüche,
**dadurch gekennzeichnet, dass** als zumindest ein Erwartungswert (3c) des dritten Submodells (3) die Gasturbineneintrittstemperatur und/oder Verdichtereintrittsmassenstrom und/oder chemische Brennstoffzusammensetzung herangezogen wird.

## Claims

1. Method for regulating and/or controlling the manipulated variables (25) of a gas turbine in a combustion system,
**characterized in that** at least
- a first submodel (1) of the gas turbine with first expected values (1c), which describe the emission behavior of the gas turbine in the combustion system, is prepared,
- a second submodel (2) of the gas turbine with second expected values (2c), which describe the stability behavior of the gas turbine, is prepared,
- a third submodel (3) with third expected values (3c), which describe the thermodynamic performance of the gas turbine, is prepared,
- and wherein the first submodel (1) is prepared before startup of the gas turbine and the second (2) and the third submodels (3) are prepared during the startup of the gas turbine,
- and wherein the manipulated variables (25) are set at least with the aid of the first (1c), second (2c), and third (3c) expected values supplied by the first, second, and third submodels (1, 2, 3), so that optimized operation of the gas turbine is enabled,
- wherein the first (1), the second (2), and the third (3) submodels are updated (In, 2n, 3n) in a time-tracked manner during the operation of the gas turbine, **in that** the expected values (1c, 2c, 3c) calculated by the respective submodels (1, 2, 3) are adapted to the measured values (1b, 2b, 3b), which are correlated with the expected values (1c, 2c, 3c) and are measured,
- and wherein in the event of a change of the operating state, the manipulated variables (25) are set on the basis of the time-tracked submodels (1, 2, 3), so that optimized operation of the gas turbine is enabled.

2. Method for regulating and/or controlling according to Claim 1,
**characterized in that**, after the time-tracked update of the submodels, the first, second, and third time-tracked submodels return a changed first, second, and third expected value (1c, 2c, 3c) and wherein at least one of the changed first, second, and third expected values (1c, 2c, 3c) differs from the original first, second, and third expected values (1c, 2c, 3c) and wherein at least one of the manipulated variables is changed at least with the aid of this changed first, second, and third expected value (1c, 2c, 3c) so that an optimized operation of the gas turbine is enabled.

3. Method for regulating and/or controlling according to Claim 1 or 2,
**characterized in that** the optimized operation is determined on the basis of a conditional optimization of a target function (15) and wherein at least the returned expected values (1c, 2c, 3c) of the three submodels (1, 2, 3) are incorporated into the conditions.

4. Method according to any one of the preceding claims,
**characterized in that** a time-tracked update is first performed when the difference of at least one of the measured values (1b, 2b, 3b) from correlated expected values (1c, 2c, 3c) returned from the respective submodel (1, 2, 3) reaches a predefined threshold value (1s, 2s, 3s) .

5. Method according to any one of the preceding claims,
**characterized in that** the NOx content in the combustion exhaust gas and/or the CO content in the combustion gas and/or a pressure drop via a pressure chamber is used as at least one expected value (1c) of the first submodel (1) .

6. Method according to any one of the preceding claims,
**characterized in that** the gas turbine has at least one burner and at least one burner parameter is used as at least one expected value (2c) of the second submodel (2c) .

7. Method according to any one of the preceding claims,
**characterized in that** the gas turbine entry temperature and/or compressor entry mass flow and/or chemical fuel composition is used as at least one expected value (3c) of the third submodel (3).

## Revendications

1. Procédé de régulation et/ou de commande des grandeurs (25) de réglage d'une turbine à gaz dans un système de combustion, **caractérisé en ce que** au moins
- on établit un premier sous-modèle (1) de la turbine à gaz avec des premières valeurs (1c) escomptées, qui décrivent le comportement d'émission de la turbine à gaz dans le système de combustion,
- on établit un deuxième sous-modèle (2) de la turbine à gaz ayant des deuxièmes valeurs (2c) escomptées, qui décrivent le comportement de stabilité de la turbine à gaz,
- on établit un troisième sous-modèle (3) avec des troisièmes valeurs (3c) escomptées, qui décrivent la performance thermodynamique de la turbine à gaz,
- et dans lequel on établit le premier sous-modèle (1) avant la mise en fonctionnement de la turbine à gaz et on établit le deuxième (2) et le troisième sous-modèles (3) pendant la mise en fonctionnement de la turbine à gaz,
- et dans lequel on règle les grandeurs (25) de réglage, au moins en s'aidant des premières (1c), deuxièmes (2c) et troisième (3c) valeurs escomptées fournies par les premier, deuxième et troisième sous-modèle (1, 2, 3), de manière à rendre possible un fonctionnement optimisé de la turbine à gaz,
- dans lequel on met à jour (1n, 2n, 3n), de manière suivie dans le temps, le premier (1), le deuxième (2) et le troisième (3) sous-modèle pendant le fonctionnement de la turbine à gaz, en adaptant les valeurs (1c, 2c, 3c) escomptées calculées par les sous-modèles (1, 2, 3) respectifs aux valeurs (1b, 2b, 3b) de mesure mesurées, en corrélation avec les valeurs (1c, 2c, 3c) escomptées,
- et dans lequel, si l'état de fonctionnement se modifie, on règle les grandeurs (25) de réglage à l'aide des sous-modèles (1, 2, 3) suivis dans le temps, de manière à rendre possible un fonctionnement optimisé de la turbine à gaz.

2. Procédé de régulation et/ou de commande suivant la revendication 1,
**caractérisé en ce que**
après la mise à jour suivie dans le temps des sous-modèles, le premier, le deuxième et le troisième sous modèles suivis dans le temps, refournissent une première, deuxième et troisième valeur (1c, 2c, 3c) escomptées modifiées, et dans lequel au moins l'une des premières, deuxièmes et troisièmes valeurs (1c, 2c, 3c) escomptées modifiées se distinguent de la première, deuxième et troisième valeur (1c, 2c, 3c) escomptées d'origine, et dans lequel on modifie au moins l'une des grandeurs de réglage en s'aidant au moins de cette première, deuxième et troisième valeurs (1c, 2c, 3c) escomptées modifiées, de manière à rendre possible un fonctionnement optimisé de la turbine à gaz.

3. Procédé de régulation et/ou de commande suivant la revendication 1 ou 2,
**caractérisé en ce que**
l'on détermine le fonctionnement optimisé à l'aide d'une optimisation conditionnée d'une fonction (15) cible et dans lequel, entrent dans les conditions au moins les valeurs (1c, 2c, 3c) escomptées refournies des trois sous-modèles (1, 2, 3).

4. Procédé de régulation et/ou de commande suivant l'une des revendications précédentes,
**caractérisé en ce qu'**
il ne s'effectue une mise à jour suivie dans le temps que si la différence entre au moins l'une des valeurs (1b, 2b, 3b) de mesure mesurées et des valeurs (1c, 2c, 3c) escomptées corrélées et refournies par le sous-modèle (1, 2, 3) respectif, atteint une valeur (1s, 2s, 3s) de seuil définie à l'avance.

5. Procédé de régulation et/ou de commande suivant l'une des revendications précédentes,
**caractérisé en ce que**
l'on tire parti, comme au moins une valeur (1c) escomptée du premier sous-modèle (1), la teneur en NOx des gaz perdus de combustion et/ou la teneur en CO des gaz de combustion et/ou une chute de pression sur une chambre de combustion.

6. Procédé de régulation et/ou de commande suivant l'une des revendications précédentes,
**caractérisé en ce que**
la turbine à gaz a au moins un brûleur et on tire parti ; comme au moins une valeur (2c) escomptée du deuxième sous-modèle (2), au moins d'un paramètre du brûleur.

7. Procédé de régulation et/ou de commande suivant l'une des revendications précédentes,
**caractérisé en ce que**
l'on tire parti, pour au moins une valeur (3c) escomptée du troisième sous-modèle (3), de la température d'entrée dans la turbine à gaz et/ou du courant massique d'entrée dans le compresseur et/ou d'une composition chimique du combustible.
